# EUROPEAN PATENT SPECIFICATION

(11) **EP 4 395 022 B1**
(45) Date of publication and mention of the grant of the patent: **07.10.2026**
(21) Application number: 23781431.4
(22) Date of filing: 31.03.2023
(51) Int. Cl.: H01M 50/145, H01M 50/141, H01M 50/124, H01M 50/119, H01M 50/24, H01M 10/6567, H01M 10/613, H01M 50/253, H01M 50/107

(54) **BATTERY CELL AND BATTERY MODULE COMPRISING SAME**
BATTERIEZELLE UND BATTERIEMODUL DAMIT
ÉLÉMENT DE BATTERIE ET MODULE DE BATTERIE LE COMPRENANT

(30) Priority: 01.04.2022 KR 20220041076
(43) Date of publication of application: 03.07.2024
(73) Proprietor: LG Energy Solution, Ltd., Seoul 07335 (KR)
(72) Inventor: JUNG, Min Yong, Daejeon 34122 (KR); KIM, Hee Gyu, Daejeon 34122 (KR); CHOI, Bum, Daejeon 34122 (KR); KEUM, Jong Yoon, Daejeon 34122 (KR); CHUNG, Jae Heon, Daejeon 34122 (KR)
(74) Representative: Plasseraud IP
(86) International application number: PCT/KR2023/004356
(87) International publication number: WO 2023/191582

(56) References cited:
- EP-A1- 3 547 389
- WO-A1-2021/232903
- CN-A- 104 756 285
- JP-A- 2014 103 026
- JP-A- 2020 140 768
- KR-A- 20130 004 141
- KR-A- 20150 006 103
- KR-A- 920 004 316
- US-A1- 2006 024 571
- US-A1- 2012 034 488
- US-B2- 10 217 975

## Description

### Technical field

The present invention is a battery cell and a battery module comprising the same, which relates, particularly, to a direct water-cooling battery cell and a direct water-cooling battery module comprising the same, and relates, in detail, to a direct water-cooling battery cell capable of improving corrosion resistance of the battery cell by using a sacrificial metal having a higher metal ionization tendency than that of a battery cell case, and a direct water-cooling battery module comprising the same.

This application claims the benefit of priority based on Korean Patent Application No. 10-2022-0041076 dated April 1, 2022.

### Background Aart

Batteries used in eco-friendly vehicles generate a large amount of heat because high power is required, and in order to improve battery performance and lifespan, it is very important to efficiently discharge heat generated from the battery, thereby preventing the batteries from overheating.

Conventionally, as a cooling system for dissipating heat from a battery, a direct air-cooling method, an indirect water-cooling method, or a direct water-cooling method is known.

The direct water-cooling method is a method in which battery cells are directly immersed in cooling water, and heat from the battery cells is directly discharged into the cooling water.

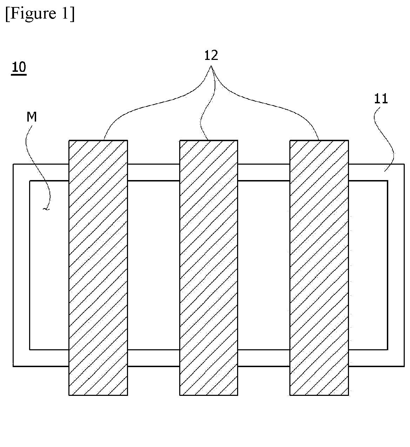

Figure 1 is a schematic configuration diagram of a conventional battery module (10).

Referring to Figure 1, a direct water-cooling type battery module (10) consists of a cell frame (11) and a plurality of battery cells (12). The plurality of battery cells (12) is spaced apart from each other in the cell frame (11). The cell frame (11) is provided so that cooling water can flow.

Generally, in the battery cell (12), an exterior case accommodating internal electrodes is made of nickel-plated iron. Accordingly, when the battery cell (12) is directly impregnated with cooling water, it is vulnerable to corrosion due to the material characteristics of the exterior case. In addition, there is a problem that the exterior case is polar, and also has vulnerable electrical insulation.

In order to prevent corrosion of the battery cell (12) in the battery module (10) of the conventional direct water-cooling method, insulating oil or special cooling water (M) (e.g., 3M's NOVEC) is used.

However, the insulating oil has a problem of being vulnerable to fire, and the special cooling water such as 3M's NOVEC is excellent as a coolant for battery cells in that it is nonpolar and has corrosion resistance, but it is expensive, whereby there is a problem of increasing the manufacturing cost of the battery module.

Also, when an antirust liquid is applied to the exterior case of the battery cell (12) in order to prevent corrosion of the battery cell (12) as in the conventional art, a post-treatment process of covering the exterior case of the battery cell (12) using a non-woven fabric is required to maintain the antirust liquid.

In addition, even if the antirust liquid is applied to the exterior case of the battery cell (12), the antirust agent flows down from the exterior case of the battery cell due to surface tension, whereby there is a problem that the antirust agent is not evenly applied to the exterior case.

Document US 2012/034488 A1 relates to corrosion inhibition of the surface treated steel sheet on which surface it has a Co layer. Document JP 2020 140768 A provides a power storage module capable of suppressing the generation and progress of rust on a metal plate.

### Disclosure

### Technical Problem

The present invention is intended to provide a direct water-cooling battery cell capable of improving corrosion resistance of a battery cell by using a sacrificial metal having a higher metal ionization tendency than that of a battery cell case, and a direct water-cooling battery module comprising the same.

### Technical Solution

A battery cell for direct water cooling according to the present invention comprises an electrode assembly, a case accommodating the electrode assembly, a first plating layer formed on an outer surface of the case, a scratch part formed by removing a partial region of the first plating layer along the thickness direction of the first plating layer, wherein the region where the scratch part is formed on the first plating layer has a thinner thickness than the surrounding region, and a sacrificial metal part provided to surround the scratch part so that the scratch part is not exposed to the outside, and formed of a material having a higher metal ionization tendency than that of the first plating layer.

In addition, the scratch part may be formed to a partial region of the first plating layer along the thickness direction of the first plating layer and an outer circumferential surface of the case facing the partial region. At this instance, the sacrificial metal part may be coupled to the outer circumferential surface of the case. In addition, the sacrificial metal part may be coupled to the outer circumferential surface of the case by a laser brazing method. Specifically, the sacrificial metal part may be coupled to the outer circumferential surface of the case while a region passing through a partial region of the first plating layer is melted by a laser beam.

Furthermore, the sacrificial metal part may comprise one or more selected from the group consisting of aluminum, magnesium, zinc, an aluminum alloy, a magnesium alloy, and a zinc alloy.

Also, the scratch part may be provided in a band shape along the circumferential direction of the case.

In addition, the scratch part may comprise a first scratch part located at the upper end of the case and a second scratch part located at the lower end of the case. At this instance, the sacrificial metal part may surround the first and second scratch parts so that the first and second scratch parts are not exposed to the outside. At this instance, the sacrificial metal part may be coupled to the first and second scratch parts, respectively. Furthermore, the sacrificial metal part may be coupled to the first and second scratch parts, respectively, while being melted by the laser beam.

Also, the first plating layer may comprise a nickel-plating layer.

In addition, the scratch part may be formed while a partial region of the first plating layer is peeled off by a laser, or a partial region of the first plating layer is peeled off by etching treatment.

The battery cell may comprise a cell sheet comprising a polymer film and provided to surround the sacrificial metal part.

Also, the cell sheet may surround the outer surface of the case so that one end of the cell sheet and the other end of the cell sheet overlap along the circumferential direction of the case.

In addition, the battery module related to one example of the present invention comprises the plurality of battery cells, a cell frame provided so that the plurality of battery cells is disposed apart from each other, and cooling water allows to flow between the plurality of battery cells, and a cooling water supply part for supplying cooling water into the cell frame.

Furthermore, the battery module may comprise a waterproof layer provided inside the cell frame and provided to cover the side end of the upper surface and the side end of the lower surface of the case, respectively., wherein the waterproof layer may comprise a waterproof adhesive or a potting resin.

In addition, the cooling water supply part may be provided to supply cooling water that is not insulated.

### Advantageous Effects

As described above, the direct water-cooling battery cell related to at least one example of the present invention, and the direct water-cooling battery module comprising the same have the following effects.

The corrosion resistance of the battery cell can be improved by using a sacrificial metal having a higher metal ionization tendency than those of the case and the first plating layer of the battery cell. In addition, the heat of the battery cell can be cooled by using a low-cost general cooling water for vehicles that is not insulated.

In addition, the heat resistance, waterproofness, and insulation properties of the battery cell can be improved through the cell sheet surrounding the sacrificial metal part.

### Description of Drawings

Figure 1 is a schematic configuration diagram of a conventional battery module.
Figure 2 is a schematic diagram showing a battery module for direct water cooling according to one example of the present invention.
Figures 3 and 4 are front views showing a scratch part of a battery cell according to one example of the present invention.
Figure 5 is a diagram for explaining a method of combining a scratch part and a sacrificial metal part.
Figure 6 is a perspective diagram schematically showing a battery cell in a state where a sacrificial metal part is coupled on a first plating layer.
Figure 7 is a perspective diagram schematically showing a battery cell disposed in a battery module.
Figures 8 and 9 are cross-sectional diagrams schematically showing a state cut along the line X-X of Figure 7.

### Mode for Invention

Hereinafter, a direct water-cooling battery cell (hereinafter, also referred to as a 'battery cell') according to one example of the present invention, and a direct water-cooling battery module (hereinafter, also referred to as a 'battery module') comprising the same will be described in detail with reference to the drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

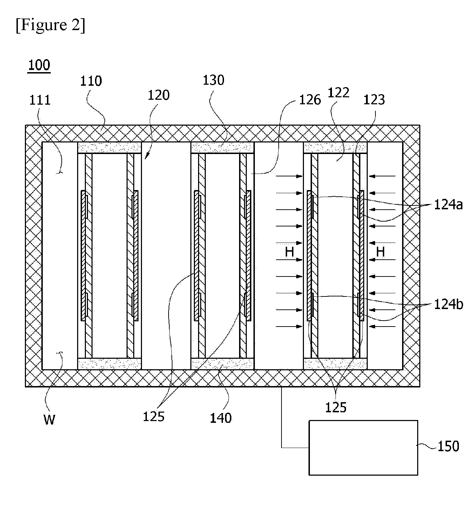

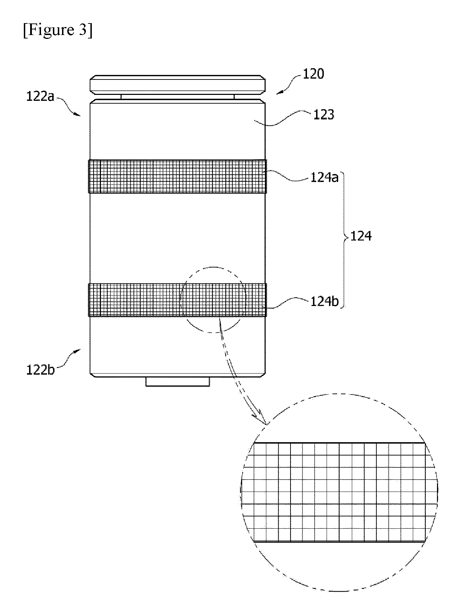

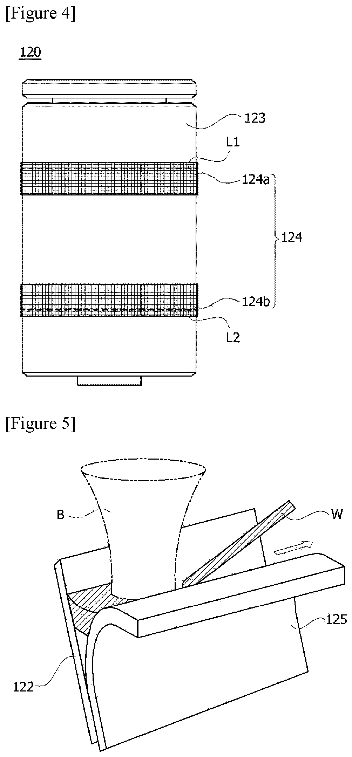

Figure 2 is a schematic diagram showing a battery module (100) for direct water cooling according to one example of the present invention, and Figures 3 and 4 are front views showing a scratch part of a battery cell (120) according to one example of the present invention.

Referring to Figure 2, the battery module (100) according to one example of the present invention comprises a plurality of battery cells (120), a cell frame (110) accommodating the plurality of battery cells, and a cooling water supply part (150). In addition, the battery module (100) comprises a plurality of battery cells (120), a cell frame (110) provided so that the plurality of battery cells (120) is disposed apart from each other, and cooling water (W) allows to flow between the plurality of battery cells (120), and a cooling water supply part (150) for supplying cooling water into the cell frame (110).

In addition, the cell frame (110) has a predetermined space part (111) therein, and is provided in a structure in which cooling water (W) can flow within the space part (111). The cooling water (W) may be supplied to the inner space part (111) of the cell frame (110), and then discharged to the outside of the cell frame (110). To this end, the battery module (100) may comprise a cooling water discharge part for discharging the cooling water (W) to the outside of the cell frame (110). The cooling water supply part (150) may comprise a cooling water storage tank and a pump. In addition, the cooling water supply part (150) may be provided to supply cooling water (W) that is not insulated. The general cooling water (W) may be cooling water generally used in vehicles.

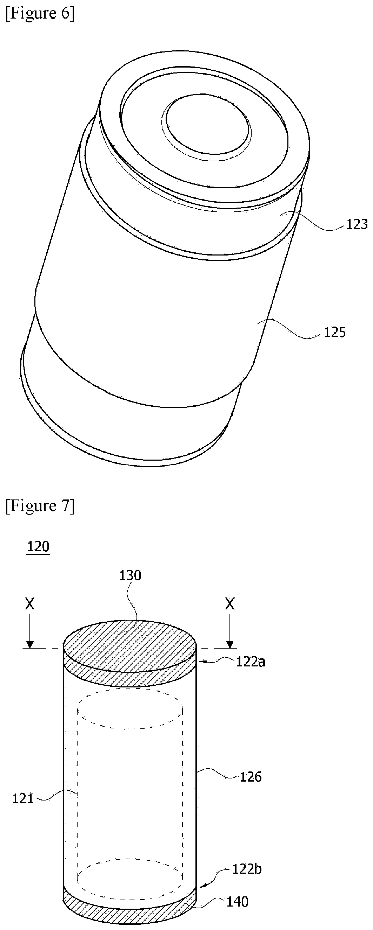

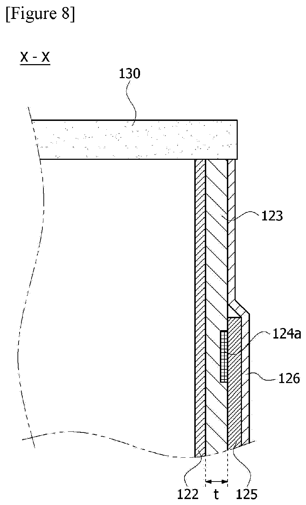

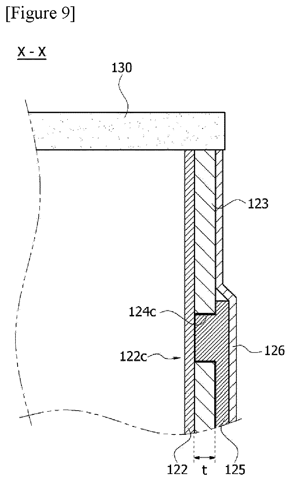

Figure 5 is a diagram for explaining a method of combining a scratch part and a sacrificial metal part, Figure 6 is a perspective diagram schematically showing a battery cell in a state where a sacrificial metal part is coupled on a first plating layer, Figure 7 is a perspective diagram schematically showing a battery cell disposed in a battery module, and Figures 8 and 9 are cross-sectional diagrams schematically showing a state cut along the line X-X of Figure 7.

The battery cell (120) according to the present invention comprises an electrode assembly (121), a case (122), a first plating layer (123), a scratch part (124), and a sacrificial metal part (125). In addition, the battery cell (120) may comprise a cell sheet (126) comprising a polymer film and provided to surround the sacrificial metal part (125).

The battery cell (120) comprises an electrode assembly (121), a case (122) accommodating the electrode assembly (121), a first plating layer (123) formed on an outer circumferential surface of the case (122), a scratch part (124: 124a, 124b) formed by removing a partial region of the first plating layer (123), and a sacrificial metal part (125) provided to surround the scratch part (124) and formed of a material having a higher metal ionization tendency than that of the first plating layer (123).

Referring to Figure 2, when the direct water-cooling battery cell (120) is immersed in the cooling water (W), the moisture (H) may be transferred to the sacrificial metal part (125). At this time, since the metal ionization reaction to moisture (H) in the sacrificial metal part (125) is greater than the metal ionization reaction to moisture in the case (122), the corrosion resistance of the case (210) can be improved.

As one example, the sacrificial metal part (125) may also be plated on the first plating layer (123), and may also be welded on the first plating layer (123).

Referring to Figure 2, when the battery module (100) uses general cooling water (W), the moisture (H) penetrates through the corroded portion on the surface of the battery cell (120), so that the power of the battery cell is energized with the general cooling water, whereby there may be a problem that the battery module (100) is damaged.

Referring to Figure 2, when the direct water-cooling battery cell (120) is immersed in the cooling water (W), the moisture (H) of the cooling water (W) is subjected to ionization reaction with the sacrificial metal part (212) due to the difference in metal ionization reaction between the case (122) and the sacrificial metal part (125), and as a result, the metal ionization reaction of the case (122) is suppressed, whereby the direct water-cooling battery cell (120) can prevent corrosion of the case (122).

The electrode assembly (121) is accommodated in the case (122), and comprises a positive electrode, a negative electrode, and a separator disposed between the positive electrode and the negative electrode. The electrode and the separator may constitute an integrated electrode assembly (121). For example, the electrode assembly (121) may be a jelly-roll type electrode assembly in which sheet-type positive and negative electrodes are wound in a state where a separator is interposed therebetween, a stack type electrode assembly in which pluralities of positive and negative electrodes are sequentially stacked in a state where a separator is interposed therebetween, or a stack/folding type electrode assembly in which unit cells obtained by stacking positive and negative electrodes in predetermined units in a state where a separator is interposed therebetween are sequentially wound in a state where they are positioned on a separation film.

In addition, the case (122) serves to accommodate the electrode assembly (121), and to protect the battery cell (120) from external impacts. The case (122) may be cylindrical, pouch, or angular, and for example, the case (122) may be cylindrical. In particular, the electrode assembly (121) may be a rolled jelly-roll type electrode assembly, the case (122) may be a cylindrical case, and the direct water-cooling battery cell (120) may be a cylindrical battery cell.

Also, the case (122) may be formed of a metal material, and the case (122) may be formed of one or more selected from the group consisting of steel or stainless steel.

In addition, the surface of the case (122) may be nickel (Ni)-plated. That is, the first plating layer (123) may comprise a nickel-plating layer.

Meanwhile, the nickel-plating layer has little discoloration, excellent rust resistance force, and excellent corrosion resistance and wear resistance. However, due to material characteristics, the nickel-plating layer may be corroded when immersed in cooling water, and as the corrosion progresses, polarity is generated and simultaneously insulation properties are deteriorated.

Meanwhile, when the sacrificial metal part (125) is provided on the first plating layer (123), the first plating layer (123) may be a factor that hinders the movement of electrons between the sacrificial metal part (125) and the case (122).

The scratch part (124) is formed on the first plating layer (123), and then the sacrificial metal part (125) is coupled to the scratch part (124), whereby electron movement between the sacrificial metal part (125) and the case (122) can be made smoothly.

Referring to Figures 3 and 8, the scratch part (124: 124a) is formed by removing a partial region of the first plating layer (123) along the thickness direction (t) of the first plating layer (123). That is, the scratch part may be formed by scraping the first plating layer (123) by a predetermined thickness, and the region where the scratch part (124) is formed on the first plating layer (123) has a thinner thickness than the surrounding region.

In addition, the scratch part (124) may be formed, as a partial region of the first plating layer (123) is peeled off by a laser or a partial region of the first plating layer (123) is peeled off by etching treatment. That is, the scratch part (124) may also be formed by scratching the first plating layer (123) by a laser, and the scratch part (124) may also be formed by etching the first plating layer (123). The etching treatment method is based on a chemical corrosion method.

Referring to Figures 3 and 9, the scratch part (124: 124c) may be formed to a partial region of the first plating layer (123) along the thickness direction (t) of the first plating layer (123) and the outer circumferential surface of the case facing the partial region. That is, the scratch part (124c) may be formed by scratching the first plating layer (123) to pass through the first plating layer (123) along the thickness direction (t), and then scratching the exposed outer circumferential surface (122c) of the case. At this instance, the sacrificial metal part (125) may be coupled to the outer circumferential surface (122c) of the case (122). In this structure, the sacrificial metal part (125) may be directly coupled to the outer circumferential surface (122c) of the case (122) by passing through the first plating layer (123).

Referring to Figures 3 and 4, the scratch treatment is performed on the first plating layer (123), whereby a plurality of depressions may be formed in the scratched region. For example, the depressions may also be provided in a lattice shape. In addition, the scratch part (124) may be provided in a band shape along the circumferential direction of the case (122).

In addition, a plurality of scratch parts (124) may be provided in different regions of the first plating layer (123). For example, the scratch part (124) may comprise a first scratch part (124a) located on the upper end (122a) of the case (122) and a second scratch part (124b) located on the lower end (122b) of the case (122).

Referring to Figures 5 and 6, the sacrificial metal part (125) may be disposed to surround the outer surface of the case (122), and may be disposed on the first plating layer (123) to surround the first plating layer (123).

In addition, the sacrificial metal part (125) may be formed of a material having a higher metal ionization reaction than that of the case (122). The sacrificial metal part (125) may comprise one or more selected from the group consisting of aluminum, magnesium, zinc, an aluminum alloy, a magnesium alloy, and a zinc alloy.

The sacrificial metal part (125) is provided to surround the scratch part (124) so that the scratch part (124) is not exposed to the outside. As one example, the sacrificial metal part (125) may be provided to surround the first and second scratch parts (124a 124b) so that the first and second scratch parts (124a 124b) are not exposed to the outside.

In this document, the scratch part (124: 124a, 124b) may comprise a region where a partial thickness of the first plating layer (123) is scratched, and a region where the first plating layer (123) is passed through and scratched to the outer circumferential surface of the case.

At this time, the sacrificial metal part (125) may be coupled to the scratch part (124), and when a plurality of scratch parts is provided, the sacrificial metal part (125) may be coupled to the first and second scratch parts (124a, 124b), respectively.

In addition, each of the first and second scratch parts (124a, 124b) may be provided in a band shape along the circumferential direction of the case (122). Furthermore, the sacrificial metal part (125) may be provided in a band shape along the circumferential direction of the case (122).

Referring to Figures 4 and 6, the upper end of the sacrificial metal part (125) may cover the first scratch part (124a), and the lower end of the sacrificial metal part (125) may cover the second scratch part (124b). As such, the sacrificial metal part (125) may be provided in a band shape covering the scratch part (124) and coupled to the first plating layer (123) (121) along the circumference of the case (122).

Referring to Figure 5, the sacrificial metal part (125) may be coupled to the scratch part along virtual bonding lines (L1, L2) extending along the circumferential direction of the case (121) by a laser brazing method. In an example in which the scratch part is formed to the outer circumferential surface of the case by passing through the first plating layer, Figure 5 is a diagram explaining a process in which the sacrificial metal part is coupled to the outer circumferential surface of the case (122) (see Figure 9).

Referring to Figure 5, the sacrificial metal part (125) may be coupled to the outer circumferential surface of the case (122) while a wire (W) is melted by the laser beam (B).

Referring to Figures 4 to 6, the upper end of the sacrificial metal part (125) may be coupled to the first scratch part (124a) while the wire (W) is melted by the laser beam along the first bonding line (L1). Here, the first bonding line (L1) means a virtual line where the wire (W) is bonded in the first scratch part (124a).

The lower end of the sacrificial metal part (125) may be coupled to the second scratch part (124b) while the wire (W) is melted by the laser beam along the second bonding line (L2). Here, the second bonding line (L2) means a virtual line where the wire (W) is bonded in the second scratch part (124b).

That is, the sacrificial metal part (125) may also be provided to integrally surround the upper and lower ends of the case (122), and the sacrificial metal part (125) may also be provided at the upper end (122a) and the lower end (122b) of the case (122), respectively.

In addition, the sacrificial metal part (125) may also be formed in a band shape to surround a partial region of the case (122) in the circumferential direction. Furthermore, the sacrificial metal part (125) may surround the case (122) along the circumferential direction of the case (122) in a ring shape.

Referring to Figures 7 to 9, the battery cell (120) may comprise a cell sheet (126) comprising a polymer film and provided to surround the sacrificial metal part (125).

The cell sheet (126) may surround the outer surface of the case (122) so that one end of the cell sheet (126) and the other end of the cell sheet (126) overlap along the circumferential direction of the case (122).

In addition, the cell sheet (126) may be in close contact with the sacrificial metal part (125) while being thermally contracted.

The cell sheet (126) may be formed of a heat-shrinkable polymer material. The heat-shrinkable polymer material may comprise one or more selected from the group consisting of polyvinyl chloride (PVC), polypropylene (PP), and polyethylene terephthalate (PET).

Meanwhile, the battery module (100) may comprise a waterproof layer (130, 140) provided inside the cell frame (110), and provided to cover the upper end (122a) and the lower end (122b) of the case (122) of the battery cell (120), respectively.

The waterproof layer (130, 140) performs a function of preventing moisture from permeating into the case (122) and fixing the battery cell (120) to the cell frame (110).

An upper waterproof layer (130) may be provided on the upper end (122a) of the case (122), and a lower waterproof layer (140) may be provided on the lower end (122b) of the case (122). As one example, the waterproof layer (130, 140) may be provided to surround a partial region of the sacrificial metal part (125). In addition, the upper end (122a) side and the lower end (122b) side of the battery cell (120) may be fixed to the inner surface of the cell frame (110) through the waterproof layer (130, 140), respectively.

The waterproof layer (130, 140) may comprise a waterproof adhesive or a potting resin, and the potting resin may be any one of a silicone-based resin, a urethane-based resin, and an epoxy-based resin.

### Industrial Applicability

According to the direct water-cooling battery cell related to at least one example of the present invention, and the direct water-cooling battery module comprising the same, the corrosion resistance of the battery cell can be improved by using a sacrificial metal having a higher metal ionization tendency than those of the case and the first plating layer of the battery cell.

## Claims

1. A battery cell (120) comprising:
an electrode assembly (121);
a case (122) accommodating the electrode assembly (121):
a first plating layer (123) formed on an outer surface of the case (122),
**characterized in that** the battery cell (120) further comprises;
a scratch part (124) formed by removing a partial region of the first plating layer (123) along the thickness direction (t) of the first plating layer (123), wherein the region where the scratch part (124) is formed on the first plating layer (123) has a thinner thickness than the surrounding region and
a sacrificial metal part (125) provided to surround the scratch part (124) so that the scratch part is not exposed to the outside, and formed of a material having a higher metal ionization tendency than that of the first plating layer (123).

2. The battery cell (120) according to claim 1, wherein
the scratch part (124) is formed to a partial region of the first plating layer (123) along the thickness direction of the first plating layer (123) and an outer circumferential surface of the case (122) facing the partial region.

3. The battery cell (120) according to claim 3, wherein
the sacrificial metal part (125) is coupled to the outer circumferential surface of the case (122).

4. The battery cell (120) according to claim 1, wherein
the sacrificial metal part (125) comprises one or more selected from the group consisting of aluminum, magnesium, zinc, an aluminum alloy, a magnesium alloy, and a zinc alloy.

5. The battery cell (120) according to claim 1, wherein
the scratch part (124) is provided in a band shape along the circumferential direction of the case (122).

6. The battery cell (120) according to claim 1, wherein
the scratch part (124) comprises a first scratch part (124a) located at the upper end (122a) of the case (122) and a second scratch part (124b) located at the lower end (122b) of the case (122), and
the sacrificial metal part (125) surrounds the first and second scratch parts (124a, 124b) so that the first and second scratch parts are not exposed to the outside.

7. The battery cell according to claim 7, wherein
the sacrificial metal part (125) is coupled to the first and second scratch parts (124a, 124b), respectively.

8. The battery cell (120) according to claim 1, wherein
the first plating layer (123) comprises a nickel-plating layer.

9. The battery cell (120) according to claim 1, wherein
in the scratch part (124), a partial region of the first plating layer (123) is peeled off by a laser, or a partial region of the first plating layer (123) is peeled off by etching treatment.

10. The battery cell (120) according to claim 1, comprising
a cell sheet (126) comprising a polymer film, and provided to surround the sacrificial metal part (125).

11. The battery cell (120) according to claim 10, wherein
the cell sheet (126) surrounds the outer surface of the case (122) so that one end of the cell sheet (126) and the other end of the cell sheet (126) overlap along the circumferential direction of the case (122).

12. A battery module (100) comprising:
a plurality of battery cells (120) according to claim 1;
a cell frame (110) provided so that the plurality of battery cells (120) is disposed apart from each other, and cooling water allows to flow between the plurality of battery cells (120); and
a cooling water supply part (150) for supplying cooling water into the cell frame (110).

13. The battery module (100) according to claim 12, wherein
the battery module (100) comprises a waterproof layer (130, 140) provided inside the cell frame (110) and provided to cover the side end of the upper surface and the side end of the lower surface of the case (122), respectively, where
the waterproof layer (130, 140) comprises a waterproof adhesive or a potting resin.

14. The battery module (100) according to claim 12, wherein
the cooling water supply part (150) is provided to supply cooling water that is not insulated.

## Patentansprüche

1. Batteriezelle (120), umfassend:
eine Elektrodenanordnung (121);
ein Gehäuse (122), das die Elektrodenanordnung (121) aufnimmt;
eine erste Plattierungsschicht (123), die auf einer Außenfläche des Gehäuses (122) ausgebildet ist,
**dadurch gekennzeichnet, dass** die Batteriezelle (120) ferner umfasst:
ein Kratzteil (124), das durch Entfernen eines Teilbereichs der ersten Plattierungsschicht (123) entlang der Dickenrichtung (t) der ersten Plattierungsschicht (123) ausgebildet ist, wobei der Bereich, in dem das Kratzteil (124) auf der ersten Plattierungsschicht (123) ausgebildet ist, eine geringere Dicke als der umgebende Bereich aufweist, und
ein Opfermetallteil (125), das vorgesehen ist, um das Kratzteil (124) zu umgeben, sodass das Kratzteil nicht nach außen freigelegt ist, und das aus einem Material mit einer höheren Metallionisationstendenz als der der ersten Plattierungsschicht (123) gebildet ist.

2. Batteriezelle (120) nach Anspruch 1, wobei
das Kratzteil (124) an einem Teilbereich der ersten Plattierungsschicht (123) entlang der Dickenrichtung der ersten Plattierungsschicht (123) und einer äußeren Umfangsfläche des Gehäuses (122), die dem Teilbereich zugewandt ist, ausgebildet ist.

3. Batteriezelle (120) nach Anspruch 3, wobei
das Opfermetallteil (125) mit der äußeren Umfangsfläche des Gehäuses (122) gekoppelt ist.

4. Batteriezelle (120) nach Anspruch 1, wobei
das Opfermetallteil (125) eines oder mehrere umfasst, die aus der Gruppe bestehend aus Aluminium, Magnesium, Zink, einer Aluminiumlegierung, einer Magnesiumlegierung und einer Zinklegierung ausgewählt sind.

5. Batteriezelle (120) nach Anspruch 1, wobei
das Kratzteil (124) in einer Bandform entlang der Umfangsrichtung des Gehäuses (122) vorgesehen ist.

6. Batteriezelle (120) nach Anspruch 1, wobei
das Kratzteil (124) ein erstes Kratzteil (124a), das sich am oberen Ende (122a) des Gehäuses (122) befindet, und ein zweites Kratzteil (124b), das sich am unteren Ende (122b) des Gehäuses (122) befindet, umfasst, und
das Opfermetallteil (125) das erste und das zweite Kratzteil (124a, 124b) so umgibt, dass das erste und das zweite Kratzteil nicht nach außen freigelegt sind.

7. Batteriezelle nach Anspruch 7, wobei
das Opfermetallteil (125) jeweils mit dem ersten und dem zweiten Kratzteil (124a, 124b) gekoppelt ist.

8. Batteriezelle (120) nach Anspruch 1, wobei
die erste Plattierungsschicht (123) eine Vernickelungsschicht umfasst.

9. Batteriezelle (120) nach Anspruch 1, wobei
in dem Kratzteil (124) ein Teilbereich der ersten Plattierungsschicht (123) durch einen Laser abgetragen wird oder ein Teilbereich der ersten Plattierungsschicht (123) durch eine Ätzbehandlung abgetragen wird.

10. Batteriezelle (120) nach Anspruch 1, umfassend
eine Zellfolie (126), die einen Polymerfilm umfasst und vorgesehen ist, um das Opfermetallteil (125) zu umgeben.

11. Batteriezelle (120) nach Anspruch 10, wobei
die Zellfolie (126) die Außenfläche des Gehäuses (122) so umgibt, dass ein Ende der Zellfolie (126) und das andere Ende der Zellfolie (126) entlang der Umfangsrichtung des Gehäuses (122) überlappen.

12. Batteriemodul (100), umfassend:
eine Vielzahl von Batteriezellen (120) nach Anspruch 1;
einen Zellrahmen (110), der so vorgesehen ist, dass die Vielzahl von Batteriezellen (120) voneinander beabstandet angeordnet ist und Kühlwasser zwischen der Vielzahl von Batteriezellen (120) fließen kann; und
ein Kühlwasserzuführungsteil (150) zum Zuführen von Kühlwasser in den Zellrahmen (110).

13. Batteriemodul (100) nach Anspruch 12, wobei
das Batteriemodul (100) eine wasserdichte Schicht (130, 140) umfasst, die innerhalb des Zellrahmens (110) vorgesehen ist und vorgesehen ist, um das Seitenende der oberen Fläche bzw. das Seitenende der unteren Fläche des Gehäuses (122) zu bedecken, wobei
die wasserdichte Schicht (130, 140) einen wasserdichten Klebstoff oder ein Vergussharz umfasst.

14. Batteriemodul (100) nach Anspruch 12, wobei
das Kühlwasserzuführungsteil (150) vorgesehen ist, um Kühlwasser zuzuführen, das nicht isoliert ist.

## Revendications

1. Un élément de batterie (120) comprenant :
un ensemble d'électrodes (121) ;
un boîtier (122) logeant l'ensemble d'électrodes (121) ;
une première couche de placage (123) formée sur une surface extérieure du boîtier (122),
**caractérisé en ce que** l'élément de batterie (120) comprend en outre ;
une partie rayée (124) formée en enlevant une région partielle de la première couche de placage (123) le long de la direction de l'épaisseur (t) de la première couche de placage (123), dans lequel la région où la partie rayée (124) est formée sur la première couche de placage (123) a une épaisseur plus faible que la région environnante et
une partie métallique sacrificielle (125) prévue pour entourer la partie rayée (124) de sorte que la partie rayée ne soit pas exposée à l'extérieur, et formée d'un matériau ayant une tendance à l'ionisation du métal plus élevée que celle de la première couche de placage (123).

2. L'élément de batterie (120) selon la revendication 1, dans lequel
la partie rayée (124) est formée sur une région partielle de la première couche de placage (123) le long de la direction de l'épaisseur de la première couche de placage (123) et une surface circonférentielle extérieure du boîtier (122) faisant face à la région partielle.

3. L'élément de batterie (120) selon la revendication 2, dans lequel
la partie métallique sacrificielle (125) est couplée à la surface circonférentielle extérieure du boîtier (122).

4. L'élément de batterie (120) selon la revendication 1, dans lequel
la partie métallique sacrificielle (125) comprend un ou plusieurs éléments choisis dans le groupe constitué par l'aluminium, le magnésium, le zinc, un alliage d'aluminium, un alliage de magnésium et un alliage de zinc.

5. L'élément de batterie (120) selon la revendication 1, dans lequel
la partie rayée (124) est prévue sous la forme d'une bande le long de la direction circonférentielle du boîtier (122).

6. L'élément de batterie (120) selon la revendication 1, dans lequel
la partie rayée (124) comprend une première partie rayée (124a) située à l'extrémité supérieure (122a) du boîtier (122) et une seconde partie rayée (124b) située à l'extrémité inférieure (122b) du boîtier (122), et
la partie métallique sacrificielle (125) entoure les première et seconde parties rayées (124a, 124b) de sorte que les première et seconde parties rayées ne sont pas exposées à l'extérieur.

7. L'élément de batterie selon la revendication 6, dans lequel
la partie métallique sacrificielle (125) est couplée respectivement aux première et seconde parties rayées (124a, 124b).

8. L'élément de batterie (120) selon la revendication 1, dans lequel
la première couche de placage (123) comprend une couche de nickelage.

9. L'élément de batterie (120) selon la revendication 1, dans lequel
dans la partie rayée (124), une région partielle de la première couche de placage (123) est décollée par un laser, ou une région partielle de la première couche de placage (123) est décollée par un traitement de gravure.

10. L'élément de batterie (120) selon la revendication 1, comprenant
une feuille d'élément (126) comprenant un film polymère, et prévue pour entourer la partie métallique sacrificielle (125).

11. L'élément de batterie (120) selon la revendication 10, dans lequel
la feuille d'élément (126) entoure la surface extérieure du boîtier (122) de sorte qu'une extrémité de la feuille d'élément (126) et l'autre extrémité de la feuille d'élément (126) se chevauchent le long de la direction circonférentielle du boîtier (122).

12. Un module de batterie (100) comprenant :
une pluralité d'éléments de batterie (120) selon la revendication 1 ;
un châssis d'élément (110) prévu de sorte que la pluralité d'éléments de batterie (120) est disposée à distance les uns des autres, et que de l'eau de refroidissement peut s'écouler entre la pluralité d'éléments de batterie (120) ; et
une partie d'alimentation en eau de refroidissement (150) pour amener de l'eau de refroidissement dans le châssis d'élément (110).

13. Le module de batterie (100) selon la revendication 12, dans lequel
le module de batterie (100) comprend une couche étanche (130, 140) prévue à l'intérieur du châssis d'élément (110) et prévue pour couvrir respectivement l'extrémité latérale de la surface supérieure et l'extrémité latérale de la surface inférieure du boîtier (122), où
la couche étanche (130, 140) comprend un adhésif étanche ou une résine d'enrobage.

14. Le module de batterie (100) selon la revendication 12, dans lequel
la partie d'alimentation en eau de refroidissement (150) est prévue pour amener de l'eau de refroidissement qui n'est pas isolée.
